# EUROPEAN PATENT APPLICATION

(11) **EP 4 797 355 A1**
(43) Date of publication of application: **26.08.2026**
(21) Application number: 25159592.2
(22) Date of filing: 24.02.2025
(51) Int. Cl.: H01M 4/525, H01M 10/0525, H01M 10/054, H01M 10/0567

(54) **NEW SILICON-PHOSPHOROUS-BASED ADDITIVES FOR HIGH VOLTAGE LITHIUM- AND SODIUM-ION BATTERIES**

(71) Applicant: Evonik Operations GmbH, 45128 Essen (DE); Albert-Ludwigs-Universität Freiburg, 79098 Freiburg (DE)
(72) Inventor: BORUP, Björn, 60316 Frankfurt (DE); ALBERT, Philipp, 79539 Lörrach (DE); KROSSING, Ingo, 79115 Freiburg (DE); SCHMUCKER, Maximillian, 79115 Freiburg (DE)
(74) Representative: Evonik Patent Association

(57) **Abstract**

The present invention relates to a method for producing an electrochemical cell, comprising the step of adding an additive comprising or consisting of a compound represented by the formula (I) wherein R¹ to R⁶ are each independently from each other H, an alkyl group having 1 to 12 carbon atoms, or an alkoxy group having 1 to 12 carbon atoms, to an electrolyte in an electrochemical cell.

## Description

Batteries are becoming ubiquitous in the modern world. As the number of applications for batteries multiples, they are subject of specialization, and the expectation on their performance in the many applications and their specific demands increases. Therefore, new raw materials must be considered to provide the path for improvements in battery performance. Such new battery applications include consumer electronics, for example smartphones and computers; electric mobility, for example electric vehicles, hybrid vehicles, e-bikes, and battery powered air taxies; or special applications, for example medical devices, drones, military equipment, and other aerospace applications such as satellites.

High performance batteries, for example lithium- or sodium-ion batteries are the most promising because of the high energy density which is required for most of the new applications, for example electric mobility or consumer electronics. There are many common requirements for these applications that are driving research in this area, such as ever higher energy densities, a larger number of charging cycles, improved rapid charging, increased safety, reduced flammability, reduced energy loss, improved cycle stability, reduced energy loss during charging, improved performance at high and low temperatures, etc.

A normal battery consists of the four components 1) anode, 2) cathode, 3) separator, and 4) electrolyte. Changes in any of these will also require changes in all of the other components, and in particular in the electrolyte because it is in contact with all of the other components. New materials in the cathode or anode, for example, will usually require changes to the electrolyte, especially to the additive packages, as well as to the separator, and often also to the anode.

The additive packages are of major importance as they are designed to improve functioning of the battery cell. The additives have many different purposes such as ion conductivity, battery stability, (SEI, CEI) film forming, electrode stability, fire reduction, cycle stability, temperature stability, and other purposes.

There are several key aspects to cell chemistry that are important for such performance improvements. These are energy density, first coulombic efficiency, and cycle stability (discharge capacity over the lifetime of the cell).

The stability of the cell (the coulombic efficiencies of the cell over many cycles) as well as the first coulombic efficiencies depend very much on the stability of the CEI (cathode-electrolyte-interface) the SEI (solid-electrolyte-interface). These interfaces are formed during the first charge-discharge cycle. The structure of these interfaces is of major importance as it is responsible for protecting the electrode but also needs to have a porosity to allow for the passage of lithium ions. Such layers should neither be too thick nor too thin, as this either increases resistivity or reduces the protective effect of the layers. Thus, the formation of the layers is an art in itself, and additives have a very important role in the layer formation.

Important cell performance parameters such as lifetime, quick-charge capability, heating of the cell during charging, and safety are very much connected to the stability, thickness, hardness, and porosity of the SEI and CEI. Therefore, additives are sought that can improve the formation of these layers.

Lithium ions need to cross the CEI as well as the SEI. Thus, a layer needs to be porous enough to allow for a crossing of the lithium ions, but it also still needs to be able to protect the cathode as well as the anode from side products in the electrolyte. For example, the SEI is a limiting factor for lithium ion transport. For high ion diffusion, the SEI needs to provide a low interfacial impedance and should also prevent solvated species in the electrolyte from entering the interface into the bulk electrode material. Thickness and conformity of this phase are important, as both aspects influence the occurrence of side reactions between the electrolyte solution and the electrode. A dense, intact SEI protects against electron tunneling and implied reductions in the electrolyte solution. Volume changes during cycling represent one of main SEI challenges to be solved, as this can lead to cracks in the SEI layer and can affect battery performance. In this context, a limited thickness of the SEI is also important, since capacity fading and raised charge transfer resistance occur above a certain SEI thickness. Without a homogeneous SEI layer formation, battery efficiency and safety decrease due to the occurrence of cracks. The uniform formation of an SEI layer can be achieved mainly by low rate cycling during first cycles and complete wetting of electrode material, as well as judicious choice of additive to the electrolyte.

The coulombic efficiency of a cell is of utmost importance for the lifetime of a cell. The better the coulombic efficiency of the cell after a hundred or two hundred cycles, the longer the cell can be used. As the charging capacity declines for example over the lifetime and number of cycles of the cell, it is important to keep the decline over many cycles as small as possible. It is also very important when constructing special cells (quick charge and discharge, high or low temperature, long life, etc.) rather than cells for standard applications. Especially cells that are used for quick charging as well as quick energy release can deteriorate more quickly. Further, there is a number of applications where ultra-long lifetimes for cells are desired. Addressing these objectives is the purview of additives to the electrolyte. There is still a general lack of additives that address all of the objectives for the whole range of batteries in development.

Another challenge is the fact that usually a package of additives is used for the many different electrolyte problems. Such additive packages are designed to improve the functioning of the cell and are often used in combination with each other. Hence, when a specific additive cannot used because of its instability, there might not be sufficient options for its replacement. Thus, an increase in the number of additives will provide for a larger number of additive combinations and this will help the battery designers to improve the electrolyte and the cell to meet the exact purpose of the cell in question.

Further, many additives have a tendency to reduce the conductivity of the electrolyte or have other detrimental effects such as a reduction in the cell voltage. For example, vinylene carbonate (VC) and fluoroethylene carbonate (FEC) are commonly used as stabilizing additives. However, their stabilizing effects are not sufficient. In detail, vinylene carbonate (VC) and fluoroethylene carbonate (FEC) are used to improve the cycle stability, but often they are involved in reactions, which are detrimental to the cell, especially at higher voltages of more than 4.3 V. Also, vinylene carbonate (VC) and fluoroethylene carbonate (FEC) have a poor thermal stability.

Especially for higher voltages, the range of additives is often very limited. This results in the use of combinations of additives that are not perfect for the actual end design and application. Further, many additives have a tendency to reduce the electrolyte conductivity or have any other detrimental effects such as a reduction in the cell voltage.

Thus, the perfect additive or perfect additive package has still not been found for many applications. Especially the commonly used stabilizing additives such as vinylene carbonate or fluoroethylene carbonate do not give sufficient stabilizing effects.

The first coulombic efficiency is indicative of the performance of the cell during its first cycle. Every improvement of the first cycle efficiency also reduces the loss of efficiency already in the first cycle. This has a significant effect on the overall efficiency of the cell during its whole lifetime. The first cycle efficiency of many cells, especially of those with higher voltages, is often low. Thus, additives that improve the first cycle coulombic efficiency are of high priority.

Cell stability and the first coulombic efficiencies depend very much on the stability and ion conductivity of the CEI (cathode-electrolyte-interface) and the SEI (solid-electrolyte-interface). These interfaces are formed during the first charge-discharge cycles. The structure of these interfaces is of major importance because it is responsible for protecting the electrode, but it also needs to have a porosity to allow for the passage of lithium ions. Such layers should therefore be neither too thick nor too thin, as this either increases resistivity or reduces the protective effect of the layers. Thus, the formation of layers is an art in itself, and additives have a very important role in their formation.

Specialized literature discloses a large variety of additives that improve cell performance through addition of additives. In this regard, especially some specific silane-phosphorous additives are quite important. Some silyl phosphites and phosphates are very commonly used and have significant advantages.

EP 2573854 A1 discloses various silyl phosphites and phosphates that can be used in standard lithium ion batteries for improvement in the cell properties, especially in high-temperatures environments and for rapid charging and discharging of batteries.

The article "Building Practical High-Voltage Cathode Materials for Lithium-Ion Batteries" (Xiang J., Wei Y., Zhong Y., Yang Y., Cheng H., Yuan L., Yu H., Huang Y., Adv. Mater. 2022, 34, 2200912) deals with all the difficulties and problems in high voltage batteries and covers several approaches for their solution. While this article describes many solution approaches to the problems still are hurdles to the economic viability of high-voltage batteries, it does not mention that an appropriate choice of electrolyte additive is also highly relevant for the functioning of a high-voltage cell (> 4.3 V).

CN 111211354 A discloses that silicon phosphorous compounds form thicker layers on electrode surfaces that increase impedance and reduce the electrochemical performance of the cell. As an answer to this problem, the combination of three compounds is proposed in the article, specifically, the combination of a phosphorous silicon compound, an episulfide ester and a compound containing boron-oxygen bounds.

CN 111864266 A discloses that the use of an alkyl-bis(trimethylsilyl)phosphite compound, specifically the addition of 0.5 to 2 wt.-% of ethyl-bis(trimethylsilyl)phosphite, propyl-bis(trimethylsilyl)phosphite, trifluoromethyl-bis(trimethylsilyl) phosphite, trifluoroethyl-bis(trimethylsilyl) phosphite, or butyl-bis(trimethylsilyl)phosphite, and the addition of a mixture of ethylene carbonate, dimethyl carbonate and ethyl methyl carbonate in a mass ratio of 1:1:1 to the electrolyte, stabilizes the cell at high voltages.

CN 117039162 A discloses that the use of a silyl-phosphite additive (or boron additive) together with a sulfur-containing compound improves the performance of a sodium-ion battery.

JP 5549438 B2 discloses that the combination of substituted phosphoric acid, boric acid or sulfuric acid compounds together with a carboxylic acid compound has excellent suitability for batteries with excellent low-temperature discharge, high current discharge as well as high temperature storage.

JP 2015156372 A discloses that a range of boron containing additives and phosphorous containing additives together with a sulfur containing compound can be used to stabilize and improve the performance of batteries in a high-voltage environment.

JP 2015201310 A discloses that a range of boron containing additives and phosphorous containing additives together with an alkylfluoro ether compound provides for a battery with improved life cycle, that can operate in a wider voltage range.

US 10,840,552 B2 discloses that the additive tris(trimethyl)silylphosphate is very good at reducing the capacity decline and impedance rise over the lifetime of a cell.

US 9,350,048 B2 discloses that the use of a trisilyl substituted phosphate or phosphite together with a boron additive are useful for batteries exposed to high temperatures.

US 2014/0113186 A1 discloses that a range of additives including some trisilyl phosphorous additives can be used to stabilize high voltage batteries and improve their capacity retention during the lifetime of the cell, especially when the cell is exposed to higher temperatures.

US 2015/0099193 A1 discloses that the use of a variety of phosphorous and boron additives, including some silyl phosphorous additives, together with a lithium salt without boron and a lithium salt with boron can be used to stabilize high-voltage batteries.

WO 2018/054710 A1 discloses a range of complexes of lithium silylphosphites made from silylphosphites.

WO 2018/054919 A1 discloses an electrolyte solution using a range of silylphosphates that improve the functioning of the cell, and WO 2019/175035 A1 discloses the use of such silylphosphates with a cathode based on manganese in batteries.

The literature mentioned and discussed above allows the conclusion that silyl substituted derivatives of phosphonic or phosphoric acid (having a phosphorous-oxygen-silicon bridge) are promising for use in lithium-ion and sodium ion-batteries. Such a class of compounds has been made to improve the characteristics of non-aqueous electrolytes for non-aqueous lithium-ion and sodium-ion batteries. However, further improvements are being demanded for such electrolyte solutions, for example excellent low-temperature discharge characteristics, high-current discharge characteristics, high-temperature storage characteristics, cycle characteristics, first coulombic efficiencies, and higher voltage stability. Part of the expected action of these silyl phosphorous additives is HF scavenging in the electrolyte bulk as well as manganese scavenging as these components are detrimental to the cell. Further, they should aid in the formation of a protective layer on the surface of the anode and/or cathode.

Requirements for additives are increasing due to the use of new cathodes, anodes, and electrolyte materials that make high requirements on electrolyte additives. Amongst others, they must show stability towards high cell voltages, oxygen release, solvation of transition metal cations leading to metal dissolution, gas evolution upon storage, improved ion mobilities, and reduction in flammability.

In most cases, the best effect of silyl phosphates is achieved in combination with other additives. Such combinations, even though they may be practical in study of the system and to show improvements for some range of cells, are not practical for formulation experts as they reduce the flexibility to formulate the specific electrolyte composition for the actual need and demand of the battery that needs to be developed.

Additionally, many of the compounds display poor first coulombic efficiencies. Another drawback of these materials is that, even though they stabilize manganese-based cathodes in lithium ion batteries and scavenge HF, the stabilizing and scavenging effect is not enough, from a practical point of view, as there is no widespread commercial use.

Currently, tris(trialkyllsilyl) phosphite (TMSPi) is widespread in its use as additive in many applications. Such compounds are usually used for manganese rich cathode materials where manganese leaching and HF play an important role in the destruction of the cell, directly reducing its lifetime.

US 2022/0285732 A1 discloses the use of lithium bis(trimethylsilyl)phosphate complexes for use in lithium ion batteries, especially for batteries using manganese-based cathodes.

For sodium-ion batteries long cycle lifetimes, initial coulombic efficiencies, high temperature stability, transition metal dissolution, and electrolyte instability are also important and currently hinder their widespread commercial use. Therefore, there is a need for new additives and additive packages which solve these problems.

It was therefore an objective of the present invention to provide an additive that solves the problems of the prior art.

It was found that these problems are solved by use of a compound represented by the formula (I) 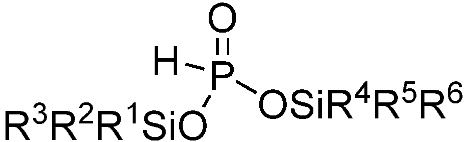 wherein
- R' to R⁶: are each independently from each other H, an alkyl group having 1 to 12 carbon atoms, or an alkoxy group having 1 to 12 carbon atoms,
as additive to an electrolyte in electrochemical cells.

One object of the present invention is therefore a method for producing an electrochemical cell, comprising the step of adding an additive comprising or consisting of a compound represented by the formula (I) 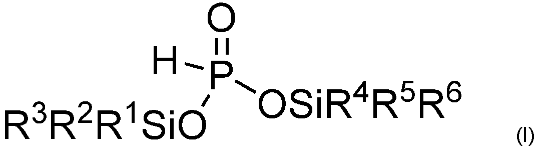 wherein
- R' to R⁶: are each independently from each other H, an alkyl group having 1 to 12 carbon atoms, or an alkoxy group having 1 to 12 carbon atoms,
to an electrolyte in an electrochemical cell.

Electrochemical cells with the additive according to the present invention show improved stability towards reactivity during the charge and discharge process as evidenced by cyclovoltammetry. Further, it has a better first coulombic efficiency in comparison to the tris(trimethylsilyl) phosphite of the prior art.

In an embodiment of the method according to the present invention, R¹ to R⁶ are each independently from each other an alkyl group having 1 to 12 carbon atoms.

In a preferred embodiment of the method according to the present invention, R¹ to R⁶ are each independently from each other methyl, ethyl, propyl, and/or butyl.

In another preferred embodiment of the method according to the present invention, R¹ to R⁶ are all methyl.

In particular, the compound represented by the formula (I) is bis(trimethylsilyl)phosphite (BMSPi).

The disilyl ester of the phosphoric acid according to the present invention has excellent ability to provide stability for the electrolyte in lithium and sodium ion cells. An important improvement has been the first cycle coulombic efficiency that is significantly improved in comparison to other additives. Further, it displays different reactivity in cyclic voltammetry indicating significant improvement in the electrolyte stability when the additive is added. In addition, it also reduces side reactions which can also be evidenced by cyclic voltammetry.

In another embodiment of the method according to the present invention the electrochemical cell is a lithium-ion cell or a sodium-ion cell.

It was also found that the addition of about 0.01 to 10 wt.-%, based on the total weight of the electrolyte, of the compound (I) according to the present invention to an electrolyte in an electrochemical cell, preferably a sodium ion cell or a lithium ion cell, leads to
a) improvements of the first coulombic efficiency,
b) increases in the stability of the electrolyte as evidenced by cyclic voltammetry
over the class of tris(trialkylsilyl) phosphite (TMSPi) additives.

Further, reactions that occur in the cyclic voltammetry cell during a specific cell design point to much more clean reactivity of the additive according to the present invention. Such improved reactivity shows a reduction in the number of side reactions during charging and discharging which often results in long term problems in cell stability. In addition, the SEI and CEI can be formed in a much better way when the reactivity is cleaner.

In a further embodiment of the method according to the present invention the compound represented by the formula (I) is added to the electrolyte in the electrochemical cell in an amount of 0.01 to 10 wt.-%, based on the total weight of the electrolyte in the electrochemical cell.

Preferably, the compound represented by the formula (I) is added to the electrolyte in the electrochemical cell in an amount of 0.05 to 8 wt.-% or 0.1 to 5 wt.-%, based on the total weight of the electrolyte in the electrochemical cell.

Another object of the present invention is an electrolyte composition comprising
i) at least one electrolyte;
ii) at least one lithium or sodium ion containing conducting salt; and
iii) at least one additive comprising or consisting of the compound represented by the formula (I) according to the present invention.

The electrolyte composition can contain the compound represented by the formula (I) according to the present invention as the only additive or in combination with one or more further additives. For example, the electrolyte composition EF2 (according to the invention) comprises the compound represented by the formula (I) according to the present invention as the only additive, i.e., the additive consists of the compound represented by the formula (I). In another example, the electrolyte composition EF3 (according to the invention) comprises the compound represented by the formula (I) according to the present invention in combination with another additive. i.e., the additive comprises the compound represented by the formula (I).

In the context of the present invention, many types of electrolytes can be used in the electrolyte composition according to the present invention and in the electrochemical cell according to the present invention. Usually, carbonates, for example dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and 1,2-dimethoxyethane are used as the base electrolyte. The electrolyte can also be a polymer such as in solid-state batteries. Examples of such electrolytes are ion conducting polymers such as polyvinylalcohol (PVA), polyacrylate acid (PAA), polymethyl acrylate (PMA), polyepichlorohydrin (PECH), and poly(sodium-acrylate) (PSA).

In one embodiment of the electrolyte composition according to the present invention at least one electrolyte comprises or consists of dimethyl carbonate (DMC), diethyl carbonate (DEC), dipropyl carbonate (DPC), methylethyl carbonate (MEC), methylpropyl carbonate (MPC), ethylpropyl carbonate (EPC), ethylene carbonate (EC), propylene carbonate (PC), butylene carbonate (BC), 1,2-dimethoxyethane, polyvinyl alcohol (PVA), polyacrylate acid (PAA), polymethyl acrylate (PMA), polyepichlorohydrin (PECH), and poly(sodium-acrylate) (PSA).

Typical lithium ion containing conducting salts in the electrolyte composition according to the present invention and in the electrochemical cell according to the present invention are lithium hexafluorophosphate (LiPF₆), lithium tetraborate (LiBF₄), or the arsenic or antimony analogues such as LiSbF₆, LiAsF₆. Further suitable lithium salts are lithium perfluorosulphate (LiPFSO), LiClO₄, LiCl₄, LiAlO₂, LiAlCl₄, LiCl, Lil, and lithium bis(oxalate)borate LiBOB amongst others. A mixture of any of the aforementioned can be also used as lithium containing conducting salt in the electrolyte composition according to the present invention and in the electrochemical cell according to the present invention.

In an embodiment of the electrolyte composition of the present invention the at least one lithium ion containing conducting salt is selected from LiPF₆, LiBF₄, LiSbF₆, LiAsF₆, lithium perfluorosulphate (LiPFSO), LiClO₄, LiCl₄, LiAlO₂, LiAlCl₄, LiCl, Lil, and LiBOB.

Typical sodium ion containing conducting salts in the electrolyte composition according to the present invention and in the electrochemical cell according to the present invention are sodium hexafluorophosphate (NaPF₆), sodium tetraborate (NaBF₄), or the arsenic or antimony analogues such as NaSbF₆, NaAsF₆. Further suitable sodium salts are NaAlO₂, NaAlCl₄, NaCl, Nal, and sodium bis(oxalate)borate NaBOB amongst others. Mixture of any of the aforementioned can be also used as sodium containing conducting salt in the electrolyte composition according to the present invention and in the electrochemical cell according to the present invention.

In another embodiment of the electrolyte composition of the present invention the at least one sodium ion containing conducting salt is selected from NaPF₆, NaBF₄, NaSbF₆, NaAsF₆, NaAlO₂, NaAlCl₄, NaCl, Nal, and NaBOB.

Further additives in the electrolyte can be one or more from lithium oxalyl difluoro borate (LiODFB), lithium difluroro bis(oxalate)phosphate, lithium tetrafluoro(oxalate)phosphate, lithium tris(oxalate)phosphate (LiTOP), and mixtures thereof. Alternatively, the one or more further additives is one or more from sodium oxalyl difluoro borate (NaODFB), lithium difluroro bis(oxalate)phosphate, lithium tetrafluoro(oxalate)phosphate, lithium tris(oxalate)phosphate (LiTOP), and mixtures thereof.

In general, the additive according to the present invention can be used in a wide range of electrochemical cells, preferably lithium ion cells or sodium ion cells.

A further object of the present invention is therefore an electrochemical cell, comprising
A) an anode comprising at least one anode active material,
B) a cathode comprising at least one cathode active material, and
C) the electrolyte composition according to the present invention.

It was also found that the addition of about 0.01 to 10 wt.-%, based on the total weight of the electrolyte in the electrochemical cell, of the compound (I) according to the present invention to an electrochemical cell, preferably a sodium ion cell or a lithium ion cell, leads to
a) improvements of the first coulombic efficiency,
b) increases in the stability of the electrolyte as evidenced by cyclic voltammetry
over the class of tris(trialkylsilyl) phosphite (TMSPi) additives.

Furthermore, reactions that occur in the cyclic voltammetry cell during a specific cell design point to much more clean reactivity of the additive according to the present invention. Such improved reactivity shows a reduction in the number of side reactions during charging and discharging which often results in long term problems in cell stability. In addition, the SEI and CEI form much more uniformly when the reactivity is cleaner.

In one embodiment the electrochemical cell according to the present invention comprises the compound represented by the formula (I) as defined above in an amount of 0.01 to 10 wt.-%, based on the total weight of the electrolyte in the electrochemical cell.

Preferably, the electrochemical cell according to the present invention comprises the compound represented by the formula (I) as defined above in an amount of 0.05 to 8 wt.-% or 0.1 to 5 wt.-%, based on the total weight of the electrolyte in the electrochemical cell.

A lithium ion electrochemical cell in general is composed of four components, 1) anode, 2) cathode, 3) separator, and 4) electrolyte. Depending on the final application many different combinations of the components 1), 2) and 4) are possible. Some possible materials for which the additive according to the present invention is used best are described below.

Examples of a cathode active material in lithium-ion batteries are layered oxides, spinel oxides or oxoanion complexes. Some examples are the lithium cobalt oxide LiCoO₂ (LCO) and lithium nickel oxide (LiNiO₂) or compounds where part of the metals have been substituted with other transition metals such as LiNi_{1-x-y}MnₓCo_{y}O₂ (NMC) where 0.01 ≤ x ≤ 0.8 and 0.01 ≤ y ≤ 0.8 (x + y < 1) or LiNiCoAlO₂ (NCA). Other examples are lithium manganese oxides (LMO) LiMn₂O₄, LiMnO₂, or LiMn₂O₃, vanadium comprising oxides, preferably LiV₃O₈, V₂O₅, and Cu₂V₂O₇, or lithium copper oxides, preferably Li₂CuO₂. Further examples are lithium manganese composed of the formula LiMn₂₋ₓMₓO₂ (M = Co, Ni, Fe, Cr, Zn or Ta, and 0.01 ≤ x ≤ 0.1), or the formula Li₂Mn₃MO₈ (M = Co, Ni, Fe, Zn or Cu) or LiMn₂O₄, in which a portion of Li is substituted with alkaline earth metal ions; disulfide compounds; Fe₂(MoO₄)₃, LiFe₃O₄, LiFePO₄ (LPF), LiNi_{0.5}Mn_{1.5}O₄ (LNMO), or manganese iron phosphates such as LiMn_{y}Fe_{1-y}PO₄ (LMFP) where 0.01 ≤ y < 1.

In an embodiment the electrochemical cell according to the present invention is a lithium ion battery and the cathode active material comprises or consists of at least one selected from layered oxides, spinel oxides and oxoanion complexes, preferably lithium cobalt oxides LiCoO₂ (LCO) and lithium nickel oxide LiNiO₂ (LNO) or modifications of these compounds in which cobalt or nickel have been substituted with other transition metals such as LiNi_{1-x-y}MnₓCo_{y}O₂ (NMC) where 0.01 ≤ x ≤ 0.8 and 0.01 ≤ y ≤ 0.8 or LiNiCoAlO₂ (NCA); lithium manganese oxides (LMO) LiMn₂O₄, LiMnO₂, or LiMn₂O₃, vanadium comprising oxides, preferably LiV₃O₈, V₂O₅, and Cu₂V₂O₇, or lithium copper oxides, preferably Li₂CuO₂; lithium manganese composed of the formula LiMn₂₋ₓMₓO₂ (M = Co, Ni, Fe, Cr, Zn or Ta, and 0.01 ≤ x ≤ 0.1), or the formula Li₂Mn₃MO₈ (M = Co, Ni, Fe, Zn or Cu) or LiMn₂O₄, in which a portion of Li is substituted with alkaline earth metal ions; disulfide compounds; Fe₂(MoO₄)₃, LiFe₃O₄, LiFePO₄ (LPF), LiNi_{0.5}Mn_{1.5}O₄ (LNMO), or manganese iron phosphates such as LiMn_{y}Fe_{1-y}PO₄ (LMFP) where 0.01 ≤ y < 1.

Usually, silicon or graphite materials are used as anode materials or anode active materials in lithium ion batteries. For example, non-graphite carbon and graphite-based carbon, silicon, silicon oxide, or graphite covered silicon. Examples for other types of anode materials, that can also be used are composite oxides such as LiₓFe₂O₃ (0 ≤ x ≤ 1), LiₓWO₂ (0 ≤ x ≤ 1), and SnₓM₁₋ₓM'_{y}O_{z} (M = Mn, Fe, Pb or Ge; M' = Al, B, P, Si, group I, group II and group III elements of the Period Table of the Elements, or halogens; 0 ≤ x ≤ 1; 1 ≤ y ≤ 3; and 1 ≤ z ≤ 8); silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. Further, anode materials such as lithium titanate (LTO), tin-based materials or even materials such as TiNb₂O₇ (XNO) can also be used.

In another embodiment the electrochemical cell according to the present invention is a lithium-ion battery and the anode active material comprises or consists of at least one selected from silicon and/or graphite comprising material; a composite oxide, preferably LiₓFe₂O₃ (0 ≤ x ≤ 1), LiₓWO₂ (0 ≤ x ≤ 1), and SnₓM₁-ₓM'_{y}O_{z} (M = Mn, Fe, Pb or Ge; M' = Al, B, P, Si, group I, group II and group III elements of the Period Table of the Elements, or halogens; 0 ≤ x ≤ 1; 1 ≤ y ≤ 3; and 1 ≤ z ≤ 8); silicon-based alloys; tin-based alloys; metal oxides, preferably SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; lithium titanate; and tin-based materials, preferably TiNb₂O₇.

Alternatively, the additive according to the present invention can be used in non-aqueous sodium-ion batteries. Such batteries are built often built in a similar way to lithium-ion batteries. Hence, many of the materials in sodium ion batteries are similar to those in lithium-ion batteries. Consequently, it is not surprising that the compound according to Formula (I) can be used as additive in such sodium-ion batteries. Nonetheless, some of the materials in sodium-ion batteries are similar to those in lithium-ion batteries, but not the same, as lithium needs to be replaced in many of the material structures. Sometimes this replacement leads to slightly different molecules as in the case of the lithium ion batteries, whereas others are only used in sodium-ion batteries.

Examples of cathode active materials in lithium ion batteries are layered oxides, spinel oxides or oxoanion complexes. Some examples are oxides such as NaₓMnO₂ or NaₓFeO₂ or some mixed metal oxides such as Naₓ(Fe,Mn,Co)O₂ or Naₓ(Mn,Mg)O₂ where 0 < x < 1. Polyanions are a further excellent group of cathode active materials, examples of which are Na₃V₂(PO₄)₃ or NaFePO₄, or sulphates such as Na₂Fe₂(SO₄)₃. Further examples are vanadium phosphate fluoride type cathode active materials such as Na₃V₂(PO₄)₂F₃ (NVPF) or the partially oxygen substituted Na₃V₂(PO₄)₂F₂O. Also, Prussian blue or analogues thereof, e.g., NaₓNi[Fe(CN)₆] or NaₓMn[Fe(CN)₆] (where 0 < x < 2) also display excellent characteristics as for the objective of the invention.

In an embodiment the electrochemical cell according to the present invention is a sodium-ion battery and the cathode active material comprises or consists of at least one selected from layered oxides, spinel oxides and oxoanion complexes, with oxides preferably being NaₓMnO₂ or NaₓFeO₂, mixed metal oxides preferably being Naₓ(Fe,Mn,Co)O₂ or Naₓ(Mn,Mg)O₂ where 0 < x < 1, polyanions preferably being Na₃V₂(PO₄)₃ or NaFePO₄, or sulphates preferably being Na₂Fe₂(SO₄)₃, vanadium phosphate fluoride type cathode active materials preferably being Na₃V₂(PO₄)₂F₃ (NVPF) or the partially oxygen substituted Na₃V₂(PO₄)₂F₂O, or Prussian blue or analogues thereof, preferably being NaₓNi[Fe(CN)₆] or NaₓMn[Fe(CN)₆] where 0 < x < 2.

Examples of anode active materials in lithium ion batteries are carbons, such as hard carbon and amorphous carbon; graphenes; carbon nanotubes, carbon arsenide (AsC₅); or metal alloys, such as NaSi, Na-Sn, and Na-Ab. Further examples of anode active materials in lithium ion batteries are metals, semi-metals, oxides, e.g., Na₂Ti₃O₇ or NaTiO₂, or molybdenum disulfide.

In another embodiment the electrochemical cell according to the present invention is a sodium ion battery and the anode active material comprises or consists of at least one selected from carbons, preferably hard carbon and amorphous carbon, graphenes, carbon nanotubes, and carbon arsenide (AsC₅); or metal alloys, preferably NaSi, Na-Sn, and Na-Ab; metals, semi-metals, or oxides, preferably Na₂Ti₃O₇ or NaTiO₂, or molybdenum disulfide.

Preferred non-aqueous solvents for a sodium ion battery according to the present invention are carbonates, in particular ethylene carbonate, diethyl carbonate, and/or propylene carbonate.

Preferred sodium ion containing conducting salts for a sodium ion battery according to the present invention are sodium hexafluorophosphate (NaPF₆) and sodium tetrafluoroborate (NaBF₄).

In an embodiment of the present invention, further additives are used, for example lithium oxalyl difluoro borate (LiODFB), lithium difluoro bis(oxalate)phosphate, lithium tetrafluoro(oxalate)phosphate, lithium tris(oxalate)phosphate (LiTOP), or mixtures of any of these.

The additive according to the present invention allows to operate an electrochemical at high voltages of more than 4.3 V.

A further object of the present invention is therefore a method of operating an electrochemical cell according to the present invention, wherein the electrochemical cell is operated at voltage higher than 4.3 V.

Yet another object of the present invention is the use of the compound represented by the formula (I) as defined above or of the electrolyte composition according to the present invention for improving the first coulombic efficiency and stability of an electrolyte or an electrochemical cell.

### Description of the Figures:

- Figure 1: shows a voltammogram illustrating the time schedule of the test procedure for the standard formation process (step 1 above, the 24 h rest step (wetting step at 40 °C) is not shown in Figure 1).The numbers 2 to 5 indicate the following steps: 2. CCCV charge (C/20, 4.95 V (Iₗᵢₘᵢₜ: 0.05C)) (pre-formation step), 3. rest step (5 min.), 4. CC discharge (C/20, 60%, SOC) (degassing of the cell), and 5. CC discharge (C/20, 3.0 V).
- Figure 2: shows the average first cycle Coulombic efficiency values of three cells for each electrolyte
- Figure 3: shows the first cycle differential capacity (dQ/dV) values of three cells for each electrolyte
- Figure 4: shows the absolute discharge capacity values of three cells for each electrolyte over the cycle number
- Figure 5: shows the relative capacity values of three cells for each electrolyte over the cycle number
- Figure 6: shows the charge/discharge voltage hysteresis (ΔV) over the cycle number for the use of each electrolyte.
- Figure 7: shows the voltaic efficiency (%) over the cycle number for the use of each electrolyte.
- Figure 8: shows the development of the internal cell resistance (starting with the initial resistance at cycle 4, then resistance at cycle 54, and finally, the resistance at cycle 104) for the use of each electrolyte.
- Figure 9: shows the volume changes (µL) resulting from the gassing for the use of each electrolyte.
- Figure 10: shows the results for first cycle cyclovoltammetry using copper as working electrode and platinum as counter electrode, using LP 57 alone, with no additive (dotted line), using LP 57 with BMSPi as additive according to the invention (solid line), and using LP 57 with TMSPi as additive not according to the invention (dashed line)
- Figure 11: shows the results for second cycle cyclovoltammetry using copper as working electrode and platinum as counter electrode, using LP 57 alone, with no additive (dotted line), using LP 57 with BMSPi as additive according to the invention (solid line), and using LP 57 with TMSPi as additive not according to the invention (dashed line)
- Figure 12: shows the results for cyclovoltammetry using super C45 as working electrode and platinum as counter electrode, using LP 57 alone, with no additive (dotted line), using LP 57 with BMSPi as additive according to the invention (solid line), and using LP 57 with TMSPi as additive not according to the invention (dashed line)
- Figure 13: shows the results for cyclovoltammetry using aluminum as working electrode and platinum as counter electrode, using LP 57 alone, with no additive (dotted line), using LP 57 with BMSPi as additive according to the invention (solid line), and using LP 57 with TMSPi as additive not according to the invention (dashed line)
- Figure 14: shows the results for cyclovoltammetry using NMC811 as working electrode and platinum as counter electrode, using LP 57 alone, with no additive (dotted line), using LP 57 with BMSPi as additive according to the invention (solid line), and using LP 57 with TMSPi as additive not according to the invention (dashed line)

### Examples:

### I. Electrolyte formulation

The electrolyte preparation and storage were carried out in a nitrogen-filled glove box (H₂O and O₂ < 0.1 ppm). Three electrolyte formulations EF1 to EF3 were prepared and evaluated. They were prepared using lithium hexafluorophosphate (LiPF₆) as electrolyte, ethylene carbonate (EC) and dimethyl carbonate (DMC) as mixed, non-aqueous solvent, and bis(trimethylsilyl) phosphite (BMSPi) as additive according to the invention or tris(trimethylsilyl) phosphite (TMSPi) as additive not according to the invention.

The electrolyte lithium hexafluorophosphate (LiPF₆) was weighed into a 10 mL graduated flask in the required amounts to obtain the targeted concentration. Ethylene carbonate (EC) and dimethyl carbonate (DMC) were weighed in one after the other in a mass ratio of 50:50 and according to the to the final composition, within a new flask, to obtain a mixed solvent. The graduated flask with the electrolyte lithium hexafluorophosphate (LiPF₆) was filled up close to the calibration mark with the appropriate solvent mixture and placed on a laboratory mixer. The dissolving process was checked regularly. After the conducting salt had completely dissolved, the graduated flask was finally filled up to the calibration mark to obtain the final solution with the LiPF₆ concentration of 1.0 mol/L. Then, the individual additives were added by weight ratio to the final formulation. 1 wt.-% of the phosphite additives was added to the three formulated electrolytes. In the electrolyte formulation, 1 wt.-% corresponds to 0.1 g of the additives.

According to this procedure the following three electrolyte formulations were prepared:

**Table 1: Overview of the three prepared electrolyte formulations and their compositions.**

| **Electrolyte formulation** | **Solvent** | **Electrolyte** | **Additive** |
|---|---|---|---|
| EF1 (not acc. to invent.) | EC:DMS (1:1 by wt.) | LiPF₆ (c = 1.0 mol/L) | TMSPi (1 wt.-%) |
| EF2 (acc. to invent.) | EC:DMS (1:1 by wt.) | LiPF₆ (c = 1.0 mol/L) | BMSPi (1 wt.-%) |
| EF3 (acc. to invent.) | EC:DMS (1:1 by wt.) | LiPF₆ (c = 1.0 mol/L) | Mixture of BMSPi and TMSPi (1:19, 1 wt.-%) |

EF1 was used as electrolyte 23-4-1 containing tris(trimethylsilyl)phosphite (TMSPi),
EF2 was used as electrolyte 23-4-2 containing bis(trimethylsilyl)phosphite (BMSPi), and
EF3 was used as electrolyte 23-4-3 containing a mixture of bis(trimethylsilyl)phosphite (BMSPi) and TMSPi tris(trimethylsilyl)phosphite (1:19) in the examples below.

From the TMS-groups in the two different components, the molarity was calculated.

**Table 2: Molarity of TMS groups in electrolyte.**

| **Additive** | **Molar mass [g/mol]** | **Molarity in electrolyte [mmol]** | **Number of TMS groups per molecule** | **Molarity of TMS groups in the electrolyte [mmol]** |
|---|---|---|---|---|
| TMSPi | 298.54 | 0.34 | 3 | 1.02 |
| BMSPi | 226.36 | 0.44 | 2 | 0.88 |

### II. Cell set-up

Lithium secondary battery having the characteristics below were prepared with each of the electrolyte formulations above.
- Cathode: LiNi_{0.5}Mn_{1.5}O₄ (LNMO)

| | |
|---|---|
| - Active material content: | 94 wt.-% |
| - Electrode mass loading: | 15.5 g × cm⁻² |

- Anode: Artificial graphite (AG)

| | |
|---|---|
| - Active material content: | 94.8 wt.-% |
| - Electrode mass loading: | 7 g × cm⁻² |

- Separator: PE (16 µm) one-sided coated with Al₂O₃ (4 µm)

| | |
|---|---|
| - Electrolyte: | EC:DMS (1:1), 1 M LiPF₆, 1 mL (4.55 mL / Ah) |
| - Nominal capacity: | ca. 240 mAh |
| - N/P ratio: | 1.18 |
| - Balanced cut-off voltage: | 3.0 - 4.95 V |
| - Cell size: | Pouch cell (CR2025) |

### III. Cell testing

- Pressure control
   - Cell holder was only designed for this cell setup
   - Controlled pressure on the cell stack was adjustable with a torque wrench
   - Pressure on cell stack was adjusted to ca. 2 bar
- Temperature control
   - All cells were electrochemically investigated under temperature control
      - Temperature variation in the cell was ± 0.2 °C
   - CCCV/CC cycling at C/3 at 40 °C

### IV. Test procedure for the standard formation process

The test procedure for the standard formation process was as follows:

| | |
|---|---|
| 1. Resting period: | 24 hours after cell construction (wetting step at 40 °C) |
| 2. Conditioning: | CCCV charge (C/3, 4.95 V (Iₗᵢₘᵢₜ: 0.05C)) (pre-formation step) |
| 3. Rest step: | 5 min. |
| 4. CC discharge | (C/20, 60% SOC), degassing of the cell) |
| 5. CC discharge | (C/20, 3.0 V) |

SOC (State-of-charge) denotes the charged capacity of a cell compared to its maximum capacity; 50% SOC means a cell with a maximum capacity of 240 mAh was charged to a capacity of 120 mAh.

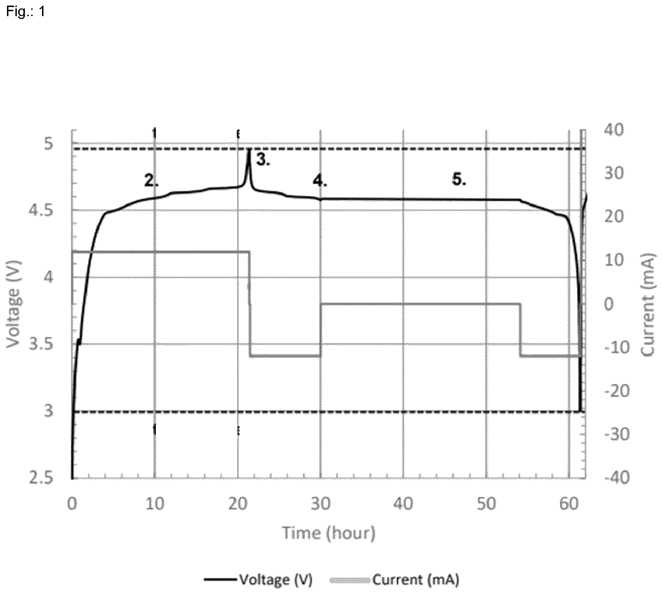

Figure 1 shows a diagram illustrating the time schedule of the test procedure for the standard formation process (step 1 above is not shown in Figure 1).

### V. Test procedure for the electrochemical investigation of AG / LNMO cells

1) Conditioning at T = 40 °C:
   - CCCV charge (C/3, 4.95 V), rest (5 min.),
      CC discharge (C/3, 3.0 V), rest (5 min.)
   - Archimedes measurement
2) SOH 100% / Capacity Determination at T = 40 °C:
   - CCCV charge (C/3, 4.95 V), rest (5 min.),
      CC discharge (C/3, 3.0 V), rest (5 min.)
   SOH (State-of-health) denotes the amount of charge that can be stored/delivered by the cell (i.e., after a certain number of cycles) compared to its original storage capability; the capacity reached in the 3^{rd} cycle is defined as SOH = 100% in this case.
3) Pulse Power Test
   - Charge to 50% SOC, C/3, equilibration tome (30 min.)
      CC discharge (1C, 30 s)
      Balancing counter-pulse (CC charge, C/3)

   The pulse power test (PPT) enables the evaluation of the internal resistance development of the cell.
   SOC (State-of-charge) denotes the charged capacity of a cell compared to its maximum capacity; 50% SOC means a cell with a maximum capacity of 240 mAh was charged to a capacity of 120 mAh.
4) Cycle Life at T = 40 °C
   - Loop of 100 cycles (EOL: 100 cycles or 80% SOH);
      CCCV charge (C/3, 4.95 V), rest (5 min.),
      CC discharge (C/3, 3.0 V), rest (5 min)
   EOL (End-of-Life) denotes when a cell can only deliver 80% of its original capacity (SOH = 80%) and the cell is considered to have reached its end of life.
5) Recovery and pulse power test at each 50 cycles
   - Pulse power test at 50% SOC, 1C, 30 s
   - Recovery: CCCV charge (C/3, 4.95 V), rest (5 min.),
      CC discharge (C/3, 3.0 V), rest (5 min)
   - Archimedes measurement after 100 cycles

### VI. Electrolyte testing in AG / LNMO cells at T = 40 °C

**1. Overview of the first cycle coulombic efficiency**

The charge capacity necessary to load the cell was always higher than the discharge capacity released during the subsequent discharge due to incomplete conversions, such as parasitic reactions and kinetic limitations.

The magnitude of these parasitic reactions can be expressed by the Coulombic efficiency (CE; discharge / charge capacity).

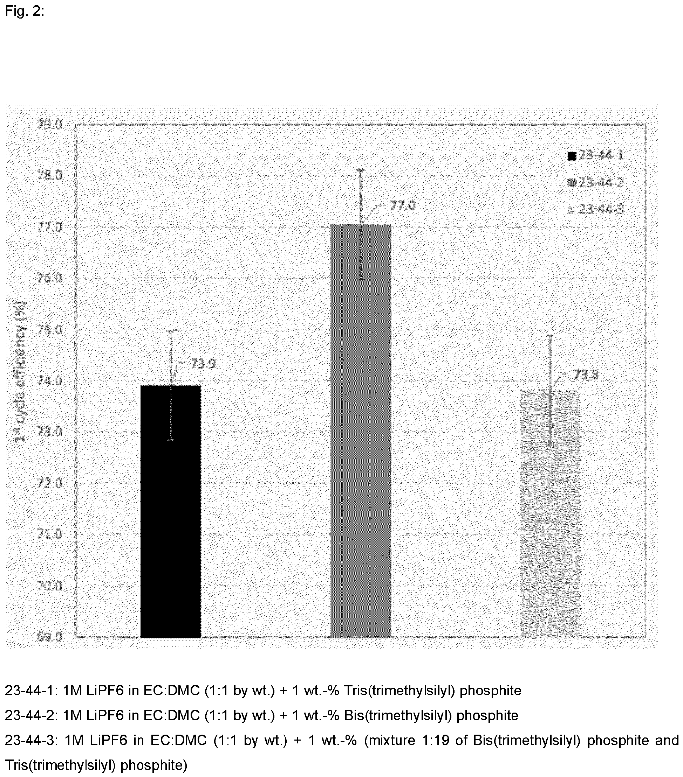

The average first cycle Coulombic efficiency values of three cells for each electrolyte are shown in Figure 2.

### Results:

- The electrolyte 23-4-1 containing Tris(trimethylsilyl) phosphite (TMSPi) as additive and the electrolyte 23-4-3 containing a mixture of Bis(trimethylsilyl) phosphite (BMSPi) Tris(trimethylsilyl) phosphite (TMSPi) (1:19) as additive each showed similar first cycle Coulombic efficiency values (~ 74%).
- The electrolyte 23-44-2 containing Bis(trimethylsilyl) phosphite (BMSPi) as additive showed a significant improvement of the first cycle Coulombic efficiency value to 77%.

### 2. Overview of first cycle differential capacity (dQ/dV)

The dQ/dV analysis during the charging step of the first cycle of a full step was used to understand the mechanisms of cell degradation, by providing information about the voltage at which selected components react with the electrodes.

### Results:

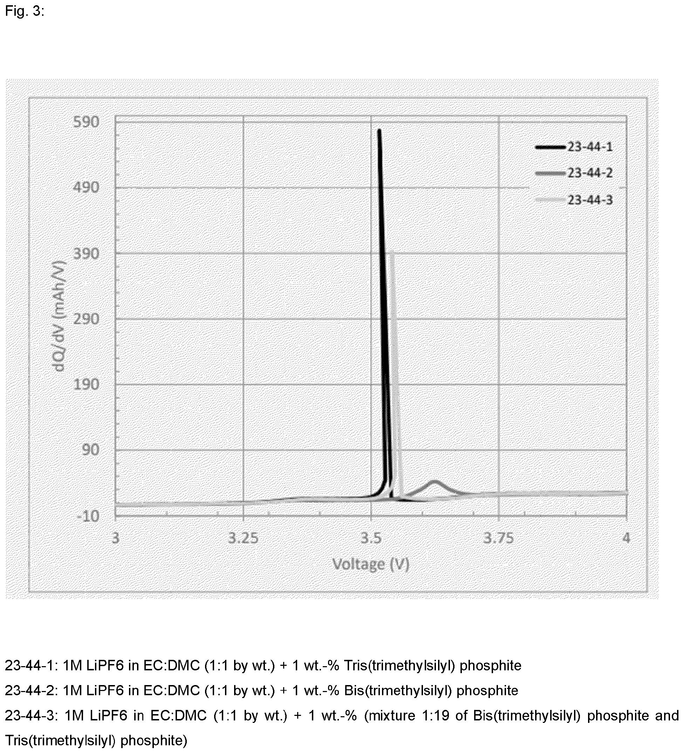

- The electrolytes 23-4-1 containing TMSPi and 23-44-3 containing a mixture of BMSPi and TMSPi (1:19) as additive showed a significant Faradaic reaction between 3.5 and 3.6 V.
- The electrolyte 23-44-2 containing BMSPi as additive showed a broad peak at 3.6 V.
- The observed Faradaic reactions in all three electrolytes could be assigned to the phosphite additives or the presence of moisture in the electrolyte.
- All components were used as such, so that small amounts of water could be present in the phosphites.
- The results are shown in Figure 3.

### 3. Overview of absolute discharge capacity

Continuous electrolyte decomposition accompanied by lithium inventory loss in every cell led to a constant fading rate of the cell.

### Results:

- The electrolyte 23-44-2 containing BMSPi as additive showed the highest capacity values in the first 70 cycles.
- The electrolyte 23-4-1 containing TMSPi as additive and electrolyte 23-44-3 containing a mixture of BMSPi and TMSPi (1:19) as additive showed similar capacity values during the first 50 cycles, while a slightly stronger capacity fade of electrolyte 23-4-1 was observed after further 30 cycles.

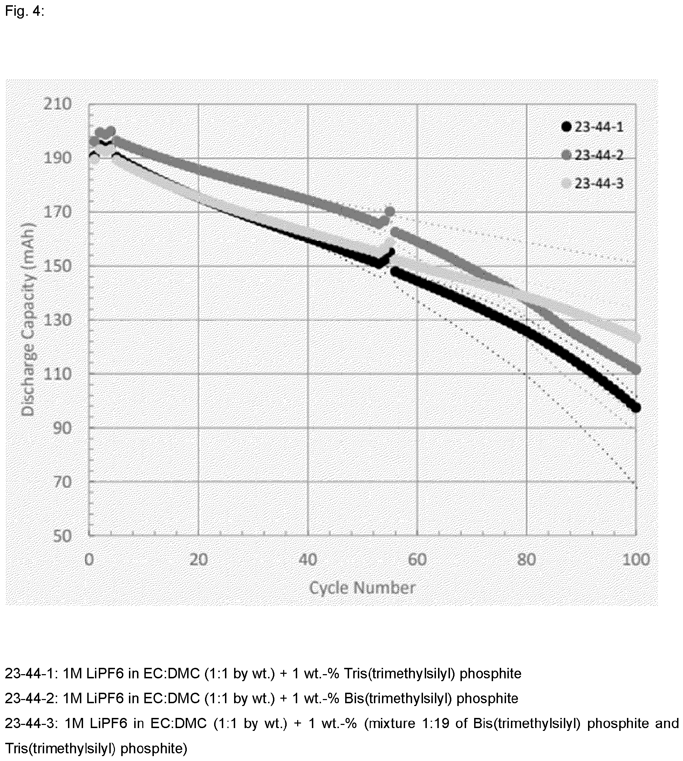

- Figure 4 shows an overview of the absolute discharge capacity.

### 4. Overview of relative capacity

Continuous electrolyte decomposition accompanied by lithium inventory loss in every cycle led to a constant capacity fading rate of the cell.

The relative capacities were normalized to the 4^{th} (first cycle at C/3).

### Results:

- The electrolyte 23-44-2 containing BMSPi as additive showed a better capacity retention during the first 70 cycles compared to the other two electrolytes.
   - The 80% SOH criterium was reached after 60 cycles.
- The electrolyte 23-4-1 containing TMSPi as additive showed the lowest capacity retention.
   - The 80% SOH criterium was reached before 50 cycles.
- The electrolyte 23-44-3 containing a mixture of BMSPi and TMSPi (1:19) as additive attained this value after 54 cycles.

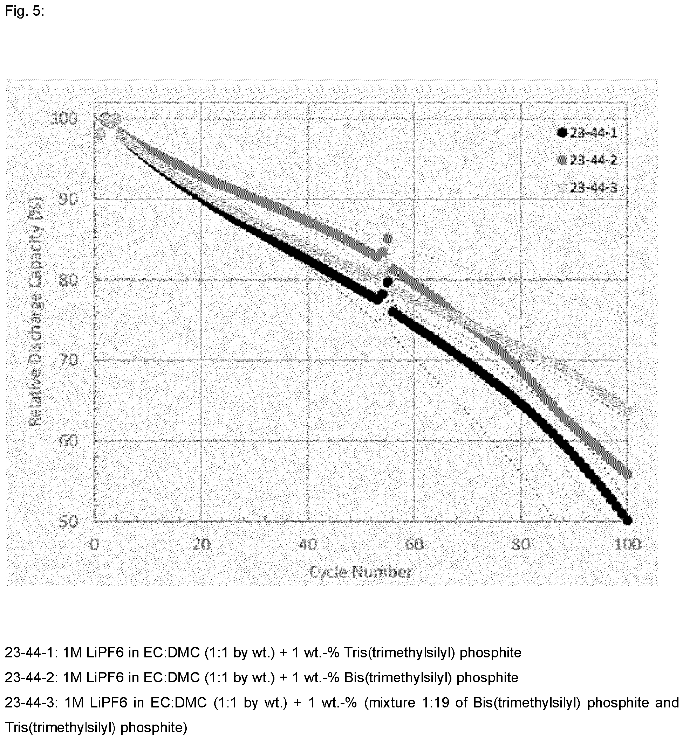

- Figure 5 shows an overview of the relative capacity. Electrolyte 23-44-2 containing BMSPi as additive and electrolyte 23-44-3 containing a mixture of BMSPi and TMSPi (1:19) as additive showed the best performances.

### 5. Overview over the internal resistance development

Cycling had an influence on the internal cell resistance development due to the continuous degradation of electrode and/or electrolyte components.

Charge/discharge voltage hysteresis (ΔV) is the difference between the average charge and discharge voltage; smaller values indicate lower resistance.

Voltaic efficiency (%): Average discharge voltage/average charge voltage; overvoltages reduce the voltaic efficiency.

### Results:

- The internal resistance growth of the cells correlated with their cycling performance.
- During the first 70 cycles, the electrolyte 23-44-2 containing BMSPi as additive showed the highest voltaic efficiency and the lowest ΔV values.

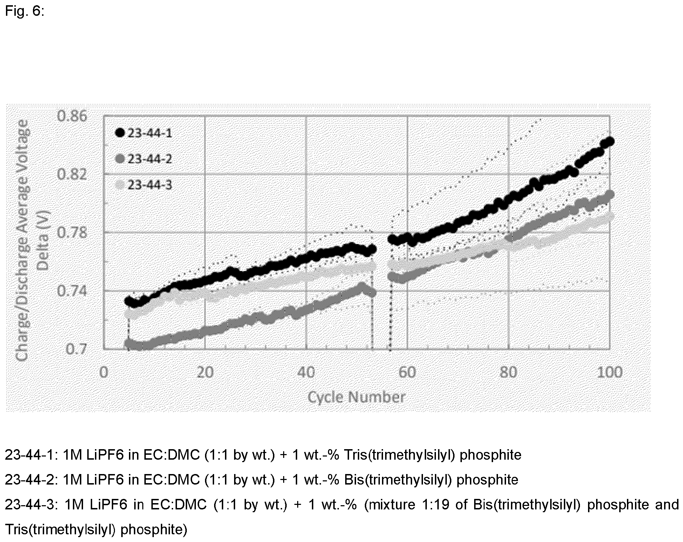

- Figure 6 shows the development of the charge/discharge voltage hysteresis (ΔV) over the cycle number for the use of each electrolyte.

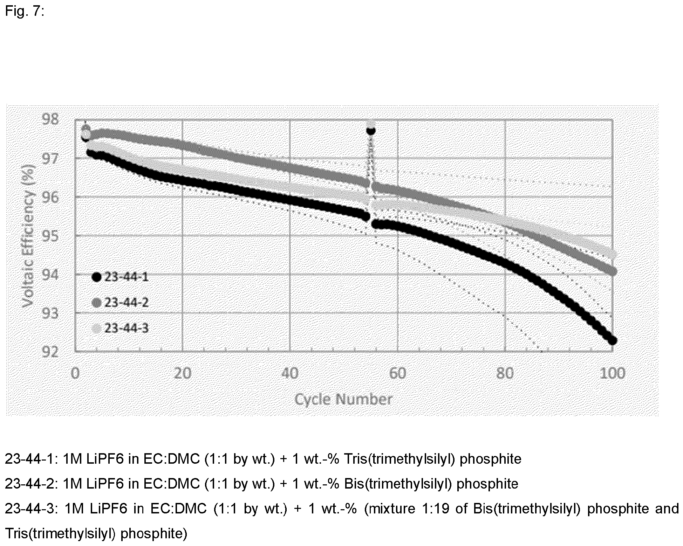

- Figure 7 shows the development of the voltaic efficiency (%) over the cycle number for the use of each electrolyte.

### 6. Summary of internal resistance development

Cycling had an influence on internal cell resistance development due to the continuous degradation of the electrode and/or electrolyte components.

### Results:

- The initial internal resistance was the highest for electrolyte 23-44-1 containing TMSPi as additive.
- During the first 70 cycles, the cells with electrolyte 23-44-2 containing BMSPi as additive showed the lowest resistance increase.
- The electrolyte 23-44-1 containing TMSPi as additive showed the highest internal resistance increase during cycling.

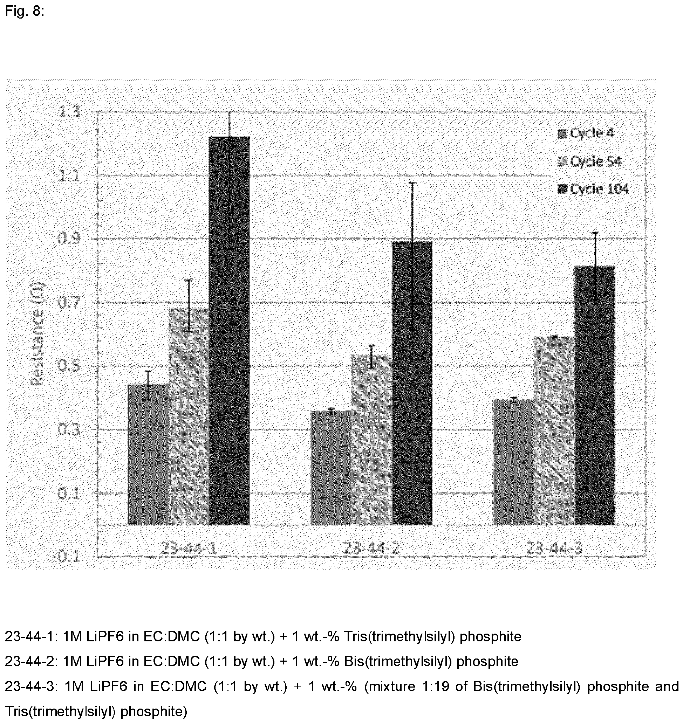

- Figure 8 shows the development of the internal cell resistance (starting with the initial resistance at cycle 4, then resistance at cycle 54, and finally, the resistance at cycle 104) for the use of each electrolyte.

### 7. Influence of electrolyte on gassing upon cycling

Archimedes measurements were carried out to evaluate the gas formation during cycling.

Formation of gas is associated with the mass and the corresponding volume changes of a cell.

The cells were immersed in water (at 25 °C) suspended on a thin wire and weighed before and after cycling.

### Results:

- A strong gas development was observed for all cells.
- Upon cycling, the electrolyte 23-44-2 containing BMSPi as additive showed the lowest gas formation among the fomulated electrolytes.
- The electrolyte 23-44-1 containing TMSPi as additive showed the highest gas formation, which is in line with the poor cycling performance.

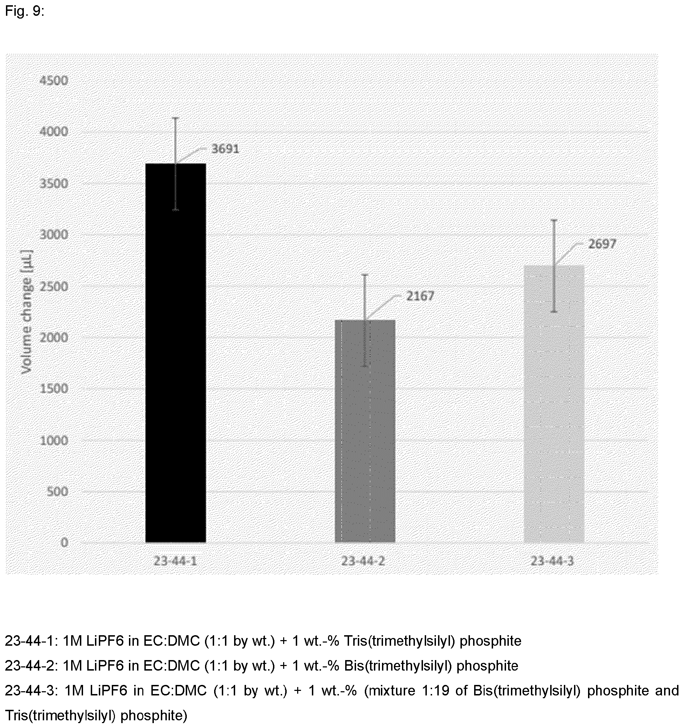

- Figure 9 shows the volume changes (µL) resulting from the gassing for the use of each electrolyte.

### 8. Summary

The electrochemical characterization of the electrolytes showed:
- The electrolyte 23-44-1 containing BMSPi as additive showed a positive influence on the electrochemical performance of the AG / LNMO cells, compared to the two other electrolytes containing TMSPi as additive.
- During the first 70 cycles, the cells with BMSPi as additive displayed the lowest internal resistance.
- A strong gas development was observed for all cells. However, the cells containing the BMSPi additive showed the lowest gas amounts as measured by means of the Archimedes method.

### VII. Cyclovoltammetry

The stability and reactivity of the electrolyte with or without additive can very well be tested and exposed using an experimental design for cyclovoltammetry. A series of combinations of working electrode and counter electrode were used for this purpose.

The electrolyte LP 57 (1M LiPF6 in EC:EMC 3:7 w/w) was used as a reference.

Bis(trimethylsilyl) phoshite (BMSPi) was used as additive in the examples according to the invention. It was added to the electrolyte LP57 to a concentration of BMSPi in the electrolyte of 0.08 mol L⁻¹.

Tris(trimethylsilyl) phosphite (TMSPi) was used as additive in the examples not according to the invention. It was added to the electrolyte LP57 to a concentration of TMSPi in the electrolyte of 0.08 mol L⁻¹.

Cyclovoltammetry was performed with a scan rate of 50 mV s⁻¹.

Copper was used as working electrode in example 1 according to the invention and in example 2 not according to the invention.

Super C45 was used as working electrode in example 3 according to the invention and in example 4 not according to the invention. Platinum was used as counter electrode.

Aluminum was used as working electrode in example 5 according to the invention and in example 6 not according to the invention. Platinum was used as counter electrode.

NMC811 (LiNi_{0.8}Mn_{0.1}Co_{0.1}O₂) was used as working electrode in example 7 according to the invention and in example 8 not according to the invention. Platinum was used as counter electrode.

### 1. Example according to the invention (copper as working electrode and platinum as counter electrode, LP 57 with BMSPi as additive)

As a reference, cyclovoltammetry was performed with a solution of LP57 (1M LiPF₆ in EC:EMC 3:7 w/w) alone with copper as working electrode and platinum as counter electrode. It was observed that the electrolyte decomposed in the first cycle with various reaction.

Cyclovoltammetry was performed under the following conditions:
- scan rate = 50 mV * s⁻¹,
- c(additive) = 0.08 mol * L⁻¹,
- working electrode = Cu, and
- counter electrode = Pt

In the example according to the invention, cyclovoltammetry of a solution of LP57 was performed under the same conditions as above, with the exception that a small amount of BMSPi was added to LP57 (concentration of BMSPi in the electrolyte was 0.08 mol L⁻¹). In this case, a much sharper peak was observed in the first cycle, which indicates layer formation on the electrode. The second cycle, on the other hand, did not show the same reaction. Hence, a protection layer was formed.

### 2. Example not according to the invention (copper as working electrode and platinum as counter electrode, LP 57 with TMSPi as additive)

In the example not according to the invention, cyclovoltammetry of a solution of LP57 was performed under the same conditions as above, with the exception that a small amount of TMSPi was added to LP57 (concentration of TMSPi in the electrolyte was 0.08 mol L⁻¹). In this case, cyclovoltammetry did not show a strong response current, neither for the first cycle nor for any subsequent cycles.

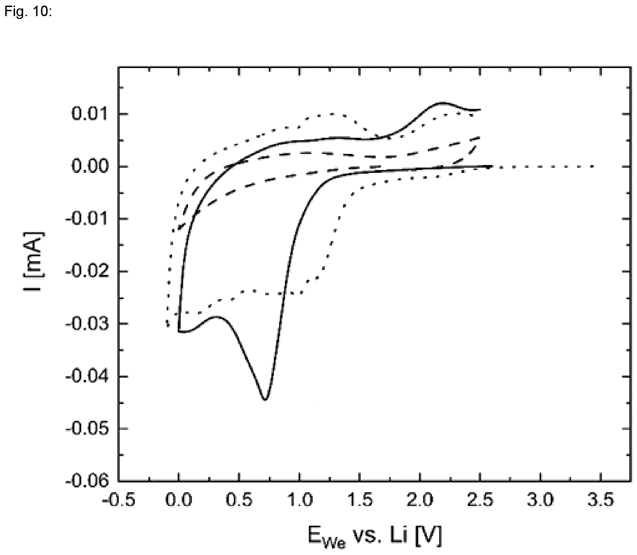

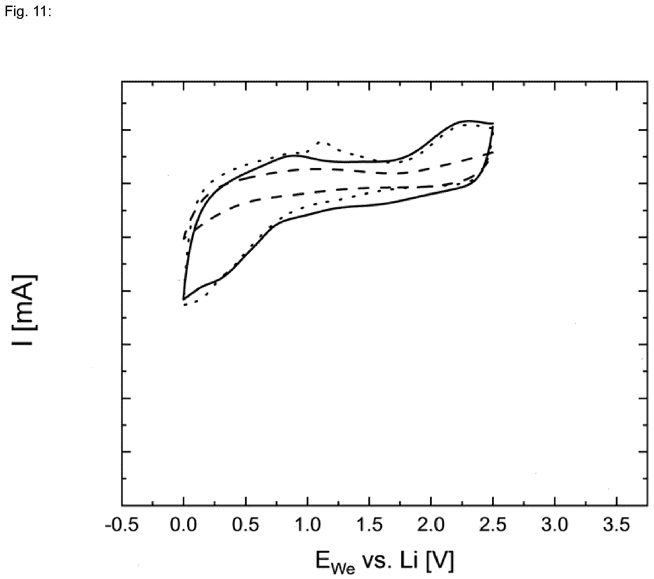

The results for examples 1 and 2 are shown in Figures 10 and 11.

### 3. Example according to the invention (conductive carbon black as working electrode and platinum as counter electrode, LP 57 with BMSPi as additive)

Copper as working electrode was replaced with super C45, which is a conductive carbon black.

Cyclovoltammetry was performed under the following conditions:
- scan rate = 50 mV * s⁻¹,
- c(additive) = 0.08 mol * L⁻¹,
- working electrode = SuperC45 on Cu, and
- counter electrode = Pt

A very strong response current was observed during cyclovoltammetry of a solution of LP57 (1M LiPF₆ in EC:EMC 3:7 w/w) alone, as reference, with C45 as working electrode and platinum as counter electrode.

By comparison, in the example according to the invention, cyclovoltammetry of LP57 with a concentration of BMSPi of 0.08 mol L⁻¹ under the same conditions showed a much smaller response current.

### 4. Example not according to the invention (conductive carbon black as working electrode and platinum as counter electrode, LP 57 with TMSPi as additive)

In the example not according to the invention, cyclovoltammetry of LP57 with a concentration of TMSPi of 0.08 mol L⁻¹ showed a stronger response current than in example 3 with BMSPi as additive.

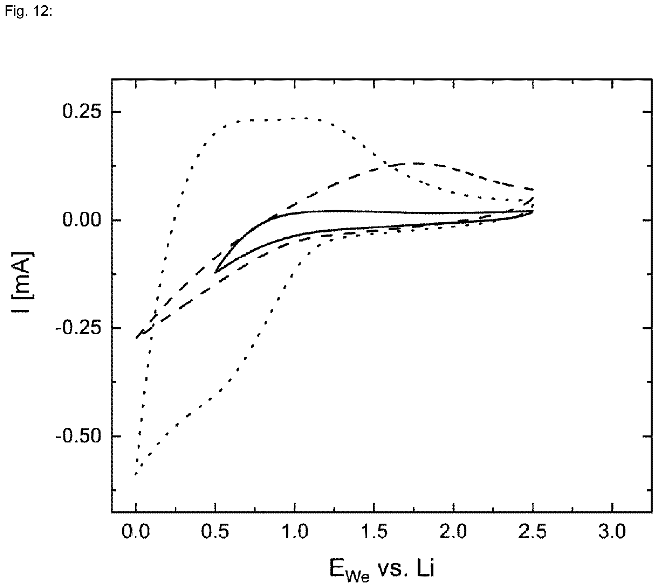

The results for examples 3 and 4 are shown in Figure 12.

### 5. Example according to the invention (aluminum as working electrode and platinum as counter electrode, LP 57 with BMSPi as additive)

The replacement of super C45 as working electrode with aluminum showed a very different reactivity.

Cyclovoltammetry was performed under the following conditions:
- scan rate = 50 mV * s⁻¹,
- c(additive) = 0.08 mol * L⁻¹,
- working electrode = Al, and
- counter electrode = Pt

Here, cyclovoltammetry of a solution of LP57 (1M LiPF₆ in EC:EMC 3:7 w/w) alone, as reference, did not show any reaction.

However, in the example according to the invention, the presence of BMSPi (c = 0.08 mol L⁻¹) as additive stabilized the electrolyte LP57 as no response current was seen during cyclovoltammetry under the same conditions.

### 6. Example not according to the invention (aluminum as working electrode and platinum as counter electrode, LP 57 with TMSPi as additive)

Cyclovoltammetry of LP57 with a concentration of TMSPi of 0.08 mol L⁻¹ showed a much stronger response current than in example 5 with BMSPi as additive.

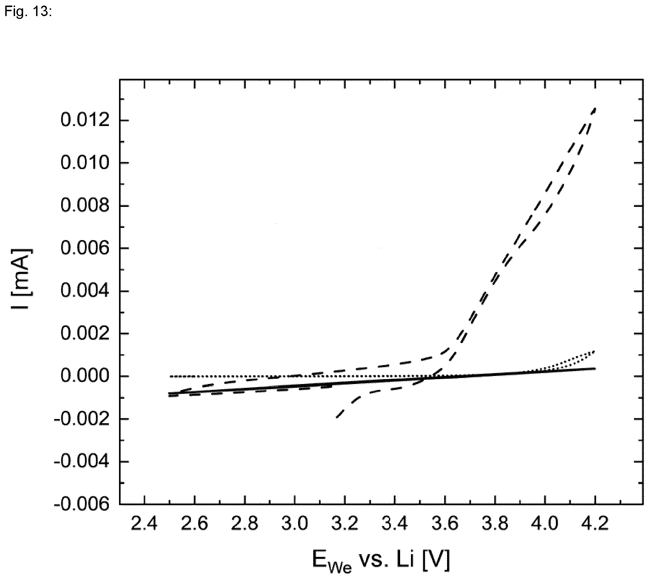

The results for examples 5 and 6 are shown in Figure 13.

### 7. Example according to the invention (NMC811 as working electrode and platinum as counter electrode, LP 57 with BMSPi as additive)

Aluminum as working electrode was replaced with NMC811 (LiNi_{0.8}Mn_{0.1}Co_{0.1}O₂).

Cyclovoltammetry was performed under the following conditions:
- scan rate = 50 mV * s⁻¹,
- c(additive) = 0.08 mol * L⁻¹,
- working electrode = NMC811, and
- counter electrode = Pt

Here, cyclovoltammetry of a solution of LP57 (1M LiPF₆ in EC:EMC 3:7 w/w) alone, as reference, did show a strong response current.

By comparison, no response current was observed in the example according to the invention, cyclovoltammetry of LP57 with a concentration of BMSPi of 0.08 mol L⁻¹ under the same conditions. This indicates a stabilization of the electrolyte.

### 8. Example according to the invention (NMC811 as working electrode and platinum as counter electrode, LP 57 with TMSPi as additive)

In the example not according to the invention, cyclovoltammetry of LP57 with a concentration of TMSPi of 0.08 mol L⁻¹ showed a strong response current.

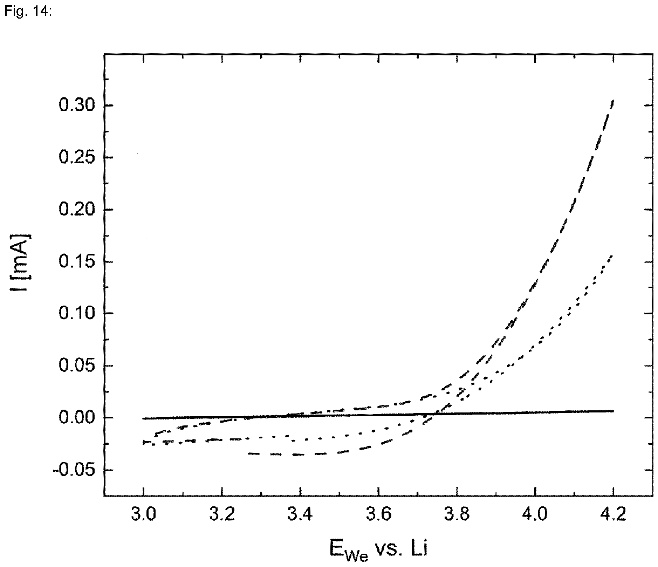

The results for examples 7 and 8 are shown in Figure 14.

### 9. Summary and interpretation of the results

The combination of a copper working electrode with a platinum counter electrode (see Figures 10 and 11) exposed a strong irregular current peak in the reduction part of the first cycle for the LP57 electrolyte. This indicates that the electrolyte LP57 underwent a range of different reactions during the first cycle, often leading to a number of unwanted side reactions. In the second cycle, this peak was gone. Thus, a protection layer has been formed on the copper electrode. This is in contrast to the observations during the first cycle using the same electrolyte but with additional presence of 0.001 to 10 wt.-% of the additive according to the invention. An electrolyte with the additional presence of the additive according to the invention led to a single peak with much less further current at other potentials. The second cycle also showed a much smaller response current for the electrolyte with the additional presence of the additive according to the invention.

The difference in the reactivities of the electrolyte LP57 and the reactivities of the electrolyte LP57 with the additive according to the invention indicates that the reactivity in both cases is strong, but much more regular and specific in the case of the electrolyte with the additive according to the invention.

By comparison, the electrolyte LP57 with the additive TMSPi (not according to the invention) showed only a small response current.

In another combination of working electrode (conductive carbon) with platinum counter electrode (see Figure 12), a strong response current was observed for the electrolyte LP57 alone, i.e., without any additive. On the other hand, the electrolyte LP57 with the additive according to the invention as well as the additive not according to the invention both showed much better stability. The addition of the additive thus increases the stability of the electrolyte.

In a further combination of working electrode (aluminum) with platinum counter electrode (see Figure 13), the response current for the electrolyte LP57 alone and for the electrolyte LP57 with the additive according to the present invention was very small. In contrast, the electrolyte LP57 with the additive TMSPi not according to the present invention showed a much stronger response current.

In yet another combination of working electrode (NMC) with platinum counter electrode (see Figure 14), the electrolyte LP57 alone and the electrolyte LP57 with the additive TMSPi not according to the invention showed a strong response current. On the other hand, the electrolyte LP57 with the additive BMSPi according to the invention showed not response current. Thus, the additive BMSPi according to the invention stabilizes the electrolyte. This stabilization achieved by the additive according to the invention is major key aspect of the present invention. The additive according to the present invention (BMSPi) leads to a significant improvement in the first cycle efficiency compared to TMSPi, which is current used as additive in electrochemical cells.

## Claims

1. A method for producing an electrochemical cell, comprising the step of adding an additive comprising or consisting of a compound represented by the formula (I) 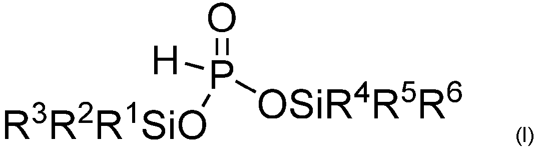 wherein
R' to R⁶ are each independently from each other H, an alkyl group having 1 to 12 carbon atoms, or an alkoxy group having 1 to 12 carbon atoms,
to an electrolyte in an electrochemical cell.

2. The method according to claim 1, wherein R¹ to R⁶ are each independently from each other an alkyl group having 1 to 12 carbon atoms, preferably methyl, ethyl, propyl, and/or butyl.

3. The method according to claim 1 or 2, wherein the electrochemical cell is a lithium-ion cell or a sodium-ion cell.

4. The method according to any of claims 1 to 3, wherein the compound represented by the formula (I) is added to the electrolyte in the electrochemical cell in an amount of 0.01 to 10 wt.-%, based on the total weight of the electrolyte in the electrochemical cell.

5. An electrolyte composition comprising
i) at least one electrolyte;
ii) at least one lithium or sodium ion containing conducting salt; and
iii) at least one additive comprising or consisting of the compound represented by the formula (I) according to any of claims 1 to 4.

6. The electrolyte composition according to claim 5, wherein the at least one electrolyte is dimethyl carbonate (DMC), diethyl carbonate (DEC), dipropyl carbonate (DPC), methylethyl carbonate (MEC), methylpropyl carbonate (MPC), ethylpropyl carbonate (EPC), ethylene carbonate (EC), propylene carbonate (PC), butylene carbonate (BC), 1,2-dimethoxyethane, polyvinyl alcohol (PVA), polyacrylate acid (PAA), polymethyl acrylate (PMA), polyepichlorohydrin (PECH), and poly(sodium-acrylate) (PSA).

7. The electrolyte composition according to claim 5 or 6, wherein the at least one lithium ion containing conducting salt is selected from LiPF₆, LiBF₄, LiSbF₆, LiAsF₆, lithium perfluorosulphate (LiPFSO), LiClO₄, LiCl₄, LiAlO₂, LiAlCl₄, LiCl, Lil, and LiBOB.

8. The electrolyte composition according to any of claims 5 to 6, wherein the at least one sodium ion containing conducting salt is selected from NaPF₆, NaBF₄, NaSbF₆, NaAsF₆, NaAlO₂, NaAlCl₄, NaCl, Nal, and NaBOB.

9. An electrochemical cell, comprising
A) an anode comprising at least one anode active material,
B) a cathode comprising at least one cathode active material, and
C) the electrolyte composition according to any of claims 5 to 8.

10. The electrochemical cell according to claim 9, wherein said electrochemical cell comprises the compound represented by the formula (I) as defined in any of claims 1 to 4 in an amount of 0.01 to 10 wt.-%, based on the total weight of the electrolyte in the electrochemical cell.

11. The electrochemical cell according to claim 9 or 10, wherein the electrochemical cell is a lithium ion battery and the cathode active material comprises or consists of at least one selected from layered oxides, spinel oxides and oxoanion complexes, preferably lithium cobalt oxides LiCoO₂ (LCO) and lithium nickel oxide LiNiO₂ (LNO) or modifications of these compounds in which cobalt or nickel have been substituted with other transition metals such as LiNi_{1-x-y}MnₓCo_{y}O₂ (NMC) where 0.01 ≤ x ≤ 0.8 and 0.01 ≤ y ≤ 0.8 (x + y < 1), or LiNiCoAlO₂ (NCA); lithium manganese oxides (LMO) LiMn₂O₄, LiMnO₂, or LiMn₂O₃, vanadium comprising oxides, preferably LiV₃O₈, V₂O₅, and Cu₂V₂O₇, or lithium copper oxides, preferably Li₂CuO₂; lithium manganese composed of the formula LiMn₂₋ₓMₓO₂ (M = Co, Ni, Fe, Cr, Zn or Ta, and 0.01 ≤ x ≤ 0.1), or the formula Li₂Mn₃MO₈ (M = Co, Ni, Fe, Zn or Cu) or LiMn₂O₄, in which a portion of Li is substituted with alkaline earth metal ions; disulfide compounds; Fe₂(MoO₄)₃, LiFe₃O₄, LiFePO₄ (LPF), LiNi_{0.5}Mn_{1.5}O₄ (LNMO) or manganese iron phosphates such as LiMn_{y}Fe_{1-y}PO₄ (LMFP) where 0.01 ≤ y < 1.

12. The electrochemical cell according to any of claims 9 to 11, wherein the electrochemical cell is a lithium ion battery and the anode active material comprises or consists of at least one selected from silicon and/or graphite comprising material; a composite oxide, preferably LiₓFe₂O₃ (0 ≤ x ≤ 1), LiₓWO₂ (0 ≤ x ≤ 1), and SnₓM₁₋ₓM'_{y}O_{z} (M = Mn, Fe, Pb or Ge; M' = Al, B, P, Si, group I, group II and group III elements of the Period Table of the Elements, or halogens; 0 ≤ x ≤ 1; 1 ≤ y ≤ 3; and 1 ≤ z ≤ 8); silicon-based alloys; tin-based alloys; metal oxides, preferably SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; lithium titanate; and tin-based materials, preferably TiNb₂O₇.

13. The electrochemical cell according to claim 9 or 10, wherein the electrochemical cell is a sodium ion battery, and the cathode active material comprises or consists of at least one selected from layered oxides, spinel oxides and oxoanion complexes, with oxides preferably being NaₓMnO₂ or NaₓFeO₂, mixed metal oxides preferably being Naₓ(Fe,Mn,Co)O₂ or Naₓ(Mn,Mg)O₂, where 0 < x < 1 polyanions preferably being Na₃V₂(PO₄)₃ or NaFePO₄, or sulphates preferably being Na₂Fe₂(SO₄)₃, vanadium phosphate fluoride type cathode active materials preferably being Na₃V₂(PO₄)₂F₃ (NVPF) or the partially oxygen substituted Na₃V₂(PO₄)₂F₂O, or Prussian blue or analogues thereof, preferably being NaₓNi[Fe(CN)₆] or NaₓMn[Fe(CN)₆] where 0 < x < 2.

14. The electrochemical cell according to any of claims 9, 10 or 13, wherein the electrochemical cell is a sodium ion battery, and the anode active material comprises or consists of at least one selected from carbons, preferably hard carbon and amorphous carbon, graphenes, carbon nanotubes, or carbon arsenide (AsC₅); or metal alloys, preferably NaSi, Na-Sn, and Na-Ab; metals, semi-metals, or oxides, preferably Na₂Ti₃O₇ or NaTiO₂, or molybdenum disulfide.

15. A method of operating an electrochemical cell according to any of claims 9 to 14, wherein the electrochemical cell is operated at voltage higher than 4.3 V.

16. Use of the compound represented by the formula (I) as defined in any of claims 1 to 4 or of the electrolyte composition according to any of claims 5 to 8 for improving the first coulombic efficiency and stability of an electrolyte or an electrochemical cell.
